Europäisches Patentamt

European Patent Office

Office européen des brevets

(11) Publication number: **0 312 289**

**A1**

## (12) EUROPEAN PATENT APPLICATION

(21) Application number: **88309478.1**

(22) Date of filing: **11.10.88**

(51) Int. Cl.4: **B32B 27/20 , B32B 27/32**

(30) Priority: **12.10.87 GB 8723900**

(43) Date of publication of application:
**19.04.89 Bulletin 89/16**

(84) Designated Contracting States:
**ES GR**

(71) Applicant: **COURTAULDS FILMS &
PACKAGING (HOLDINGS) LTD.
Bath Road
Bridgwater Somerset TA6 4PA(GB)**

(72) Inventor: **Kendall, Kenneth Douglas
St. Clair Main Road
Middlezoy Bridgwater Somerset(GB)**
Inventor: **Sullivan, Janette Mary
21, Boden Street
Derby(GB)**
Inventor: **Biczenczuk, Susan
2, Norfolk Close
Bridgwater Somerset(GB)**

(74) Representative: **Claisse, John Anthony, Dr.
Courtaulds Films & Packaging (Holdings) Ltd
Bath Road
Bridgwater Somerset TA6 4PA(GB)**

(54) **Polymeric films.**

(57) The invention concerns oriented polymeric films
including a base layer of polypropylene with a
writeable surface. The writeable surface is provided
by a blend of a first polymer having a melt flow
index of not more than 1g/10 mins as measured by
ASTM D1238/73 (condition L) with at least one poly-
mer chemically incompatible with the first polymer.
The first polymer preferably does not flow under
these conditions, and the incompatible polymer pref-
erably has a melt flow index of from 4 to 50g/10
mins under ASTM D1238/73 (condition L). The poly-
mers of each layer are preferably polyolefins.

## Polymeric Films

This invention concerns polymeric films having a surface that can be written on.

It has been proposed hitherto to prepare synthetic paper from polyolefins, in particular polypropylene, for example by including a filler in the polymer which is oriented to produce voids in the body of the films and surface roughness which provides a writeable surface. While such materials can be used as synthetic paper, they cannot be used as the basis for mending tape since mending tape has not only to be capable of being written on, it should enable indicia covered by the tape to be read through the tape and furthermore to be photocopied through the tape.

In order to provide a mending tape which facilitates such photocopying, it has been proposed to combine a clear base sheet of polypropylene with a roughened surface layer composed of a polypropylene resin containing inorganic filler particles to provide a film having a total light transmittance of at least 90 per cent when supplied with an adhesive layer.

According to the present invention there is provided an oriented polymeric film comprising a base layer of polypropylene having a writeable layer thereon, the writeable layer comprising a blend of a first polymer having a melt flow index of not more than 1g/10 mins under ASTM D1238/73 (condition L) and at least one polymer chemically incompatible therewith.

The films of the present invention have a writeable surface provided by a blend of chemically incompatible polymers. This can be achieved without the use of a filler in the writeable layer.

The blends should contain a polymer with a melt flow index of not more than 1g/10 mins under ASTM D1238/73 (condition L), and preferably this polymer should not flow under these conditions. Polyethylene can be used for the purpose, for example polyethylene having a density of from 0.920 g/cm³ to 0.970lg/cm³, and preferably about 0.936g/cm³.

Chemical incompatibility can be provided in the blends by the use of a polymer containing units derived from at least one of ethylene, propylene and but-1-ene provided that the polymer is incompatible, i.e. it should not be polyethylene or a polymer which includes sufficient ethylene based units to impart compatibility. Examples of suitable polymers which are incompatible with polyethylene include polypropylene, co-polymers of propylene or but-1-ene with ethylene, and terpolymers of propylene with ethylene and but-1-ene.

It is preferred that the melt flow index of the incompatible polymer in the blend is from 4 to 50g/10 mins under ASTM D1238/73 (condition L), especially from 6 to 15, advantageously about 8g/10 mins. The density of the incompatible polymer is preferably not less than 0.900g/cm³.

The blend used to form the writeable layer will usually contain from 25 to 75 weight percent of the first polymer having a melt flow index of not more than 1g/10mins. under the specified conditions.

Although the present invention provides films having a writeable surface without the use of a filler in the writeable layer, in particular writeability with ball-point pen or felt-tip pen, pencil writeability can be improved by the inclusion of a small amount of filler particles. Good pencil writeability can be obtained by the inclusion of up to 5 weight percent of filler particles, based on the weight of the writeable layer. An example of inorganic filler particles which can be used is finely divided silica. In order to enhance writeability, the particle size of the filler particles is preferably greater than the thickness of the writeable layer.

The thickness of the base layer can be selected as desired for a particular end use of the film. Examples of suitable thicknesses are from 15 to 55 microns, e.g. about 37 microns thick. The writeable layer is preferably from 0.5 to 10 microns thick, more particularly from 1 to 5 microns thick, and advantageously from 2 to 4 microns thick. When filler particles are included in the writeable layer, they are preferably up to 10 microns in diameter.

Writeability with ball-point pen can be improved by a surface treatment, for example corona discharge.

Films of the present invention are of particular value as a tape base in the manufacture of invisible mending tape. However, they can also be used as a packaging film. For either end use, the films can include a third polymer layer on the base layer. This further layer can be selected for example to promote acceptance of an adhesive layer or to impart printability and/or heat sealability to the surface of the film opposite the writeable layer. Examples of suitable third layers include polymers containing units derived from at least two of ethylene, propylene, but-1-ene, an acrylic ester, acrylic acid and maleic anhydride. Typically the third layer will be from 0.6 to 2 microns thick. The third layer can be corona discharge treated to aid adhesion of a subsequently applied adhesive layer. However, if a third layer is not used, it will generally be necessary to provide a primer layer if an adhesive layer is to be used.

Films of the present invention can be produced in known manner by orienting a film consisting of a polypropylene base layer and a layer of the blend thereon. Advantageously this is effected by co-extruding these layers to form a composite film which is thereafter stretched in the machine direction, for example from 4.5 to 7:1, advantageously about 6.5:1, and thence in the transverse direction, for example from 9 to 10:1.

When a third polymeric layer is used, it can be formed by coextrusion of a three layer composite film which is thereafter biaxially oriented, for example under the above stretching conditions.

Although of particular value as tape base for mending tape, films of the present invention can, when provided with a third polymeric layer, be subjected to further treatment steps, for example they can be metallised in known manner, or they can be provided with printed indicia. Films which have been treated in such a manner can be used as packaging materials.

The following Examples are given by way of illustration only. All parts are be weight unless stated otherwise, and all melt flow index values are measured under ASTM 1238/73 (condition L).

Example 1

A three-layer film web was produced by coextruding a base layer of polypropylene homopolymer with a dispersion on one face of 50% of polyethylene having a melt flow index of 0.12g/10 mins and 50% of a copolymer of ethylene and propylene having a melt flow index of 8g/10 mins, containing about 4% of units derived from ethylene, and on the other face a layer of the above ethylene/propylene copolymer. The web was cooled on a chill roll and thereafter stretched 6.5:1 in the machine direction and subsequently 9.5:1 in the transverse direction.

The resultant film had a total thickness of 40 microns, with the layer of blend being about 2 microns thick and the layer on the opposite face being about 1 micron thick.

It had a surface that showed good writeability with a ball-point pen. Furthermore, the film showed good light transmission properties so that when placed over writing or typing on paper they could be read clearly through the film.

Example 2

Example 1 was repeated but with the writeable layer being formed from a dispersion of 50% of the polyethylene of Example 1 and 50% of a copolymer of ethylene and but-1-ene containing 1.5% of ethylene, and having a melt flow index of 10g/10 min. The layer on the opposite face of the homopolymer layer was of the copolymer specified in Example 1.

The resultant film having a writeable layer 2 microns thick and a copolymer layer 1 micron thick had similar properties to those of the film produced in Example 1.

Example 3

Example 2 was repeated but using a copolymer of ethylene and but-1-ene containing 5% of ethylene and having a melt flow index of 40g/10 min. in place of the copolymer containing 1.5% of ethylene. The polymer layer on the opposite face was the copolymer as in Example 1.

The resultant film after stretching the coextruded three-layer web had a writeable layer 4 microns thick and a copolymer layer on the opposite face 1 micron thick.

The writeable surface of the film had a slightly rougher feel than that of the film produced in Example 2. However its writeability with ball-point pen and its light transmission were substantially identical.

**Claims**

1. An oriented polymeric film comprising a base layer of polypropylene having a writeable layer thereon, the writeable layer comprising a blend of a first polymer having a melt flow index of not more than 1g/10 mins under ASTM D1238/73 (condition L) and at least one polymer chemically incompatible therewith.

2. A film according to claim 1, wherein the first polymer is a polyethylene.

3. A film according to claim 2, wherein the polyethylene has a density of from $0.920g/cm^3$ to $0.970g/cm^3$.

4. A film according to any of the preceding claims, wherein the blend includes a chemically incompatible polymer having a melt flow index of from 4 to 50g/10 mins under ASTM D1238/73 (condition L).

5. A film according to claim 4, wherein the chemically incompatible polymer has a melt flow index of about 8g/10 mins under ASTM D1238l/73 (condition L).

6. A film according to claim 4 or claim 5, wherein the chemically incompatible polymer contains units derived from at least one of ethylene, propene and but-1-ene, and is other than an ethylene homopolymer.

7. A film according to any of the preceding claims, wherein the blend comprises from 25 to 75 weight percent of the first polymer based on the total weight of the blend.

8. A film according to any of the preceding claims, wherein the writeable layer includes up to 5 weight per cent of organic or inorganic filler particles dispersed therein based on the weight of the layer.

9. A film according to any of the preceding claims, having a third polymeric layer on the base layer.

10. A film according to any of the preceding claims, having an adhesive layer on the base layer or on the third polymeric layer when present.

11. A film according to claim 10, in the form of a mending tape.

12. A film according to any of claims 1 to 9, in the form of a packaging film.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A-1 341 630 (TOYO BOSEKI K.K.) <br> * Claims 1-6,9,12-15; page 1, line 54 - page 4, line 2; examples 1,8-13,20-26 * <br> --- | 1-4,6-8 ,12 | B 32 B 27/20 <br> B 32 B 27/32 |
| X | FR-A-2 093 986 (K.K. OJI YUKA GOSEISHI KENKYUJO) <br> * Claims 1-4; page 3, line 10 - page 5, line 28; page 8, line 6 - page 10, line 23; examples 2,5 * <br> --- | 1-3,7,8 ,12 | |
| A | US-A-3 887 745 (T.YOSHII et al.) <br> * Claims 1,7,8; column 1, line 48 - column 4, line 62 * <br> ----- | 1,6,9, 11 | |

TECHNICAL FIELDS
SEARCHED (Int. Cl.4)

B 32 B

The present search report has been drawn up for all claims

| Place of search | Date of completion of the search | Examiner |
|---|---|---|
| THE HAGUE | 14-12-1988 | BLASBAND I. |

EPO FORM 1503 03.82 (P0401)